(19) **Europäisches Patentamt / European Patent Office / Office européen des brevets**

(11) **EP 2 748 794 B1**

(12) **EUROPEAN PATENT SPECIFICATION**

(45) Date of publication and mention of the grant of the patent:
**12.07.2017 Bulletin 2017/28**

(51) Int Cl.:
***G06T 7/00*** (2017.01)

(21) Application number: **11752059.3**

(22) Date of filing: **26.08.2011**

(86) International application number:
**PCT/US2011/049316**

(87) International publication number:
**WO 2013/032423 (07.03.2013 Gazette 2013/10)**

(54) **DEPTH CODING**

TIEFENKODIERUNG

CODAGE DE PROFONDEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2014 Bulletin 2014/27**

(73) Proprietor: **Thomson Licensing DTV
92130 Issy-les-Moulineaux (FR)**

(72) Inventors:
- **LIU, Shujie
  Amherst, NY 14226 (US)**
- **LAI, Wang Lin
  Richardson, TX 75082 (US)**
- **TIAN, Dong
  Plainsboro, NJ 08536 (US)**

(74) Representative: **HAMMES, Pierre et al
Marks & Clerk France
Immeuble Visium
22, avenue Aristide Briand
94117 Arcueil Cedex (FR)**

(56) References cited:
- **MEYER F: "AN OVERVIEW OF MORPHOLOGICAL SEGMENTATION", INTERNATIONAL JOURNAL OF PATTERN RECOGNITION AND ARTIFICIAL INTELLIGENCE (IJPRAI), WORLD SCIENTIFIC PUBLISHING, SI, vol. 15, no. 7, 1 November 2001 (2001-11-01), pages 1089-1118, XP001110317,**
- **TAGUCHI Y ET AL: "Stereo reconstruction with mixed pixels using adaptive over-segmentation", COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1-8, XP031297249,**
- **M. MORIMOTO ET AL.: "Robust Object Segmentation Using Low Resolution Stereo", AUTOMATION CONGRESS 2004. PROCEEDINGS, vol. 18, 1 July 2004 (2004-07-01), pages 75-80, XP002675242,**
- **LIFANG GU ET AL: "Skin colour region detection in MPEG video sequences", IMAGE ANALYSIS AND PROCESSING, 1999. PROCEEDINGS. INTERNATIONAL CONFER ENCE ON, VENICE, ITALY, 27-29 SEPT. 1999, IEEE COMPUT. SOC, US, 27 September 1999 (1999-09-27), pages 898-903, XP010354192,**
- **CHEE SUN WON: "A Block-Based MAP Segmentation for Image Compression", IEEE TRANSACTIONS ON CIRSUITS AND SYSTEMS FOR VIDEO TECHNOLOGY, vol. 8, no. 5, September 1998 (1998-09), pages 592-601, XP002674715,**
- **W. TAN ET AL.: "A Region Based Segmentation Using Pixel Block Fuzzy Similarity", INFORMATION AND COMMUNICATION TECHNOLOGIES, ICTTA '06, 2006, pages 1516-1521, XP002674716,**
- **SHUJIE LIU ET AL: "New Depth Coding Techniques With Utilization of Corresponding Video", IEEE TRANSACTIONS ON BROADCASTING, IEEE SERVICE CENTER, PISCATAWAY, NJ, US, vol. 57, no. 2, 1 June 2011 (2011-06-01), pages 551-561, XP011323532,**

**Description**

## TECHNICAL FIELD

Implementations are described that relate to 3D. Various particular implementations relate to coding depth maps that are associated with video images.

## BACKGROUND

In three-dimensional ("3D") applications, video images are frequently accompanied by depth information. The depth information may be used for a variety of processing operations on the video images. Compression, referred to herein as encoding, of the depth information attempts to reduce the size of the depth information. Efficient encoding is an ongoing desire in order to facilitate storage and transmission of the depth information.

Document SHUJIE LIU ET AL: "New depth coding techniques with utilisation of corresponding video", IEEE transactions on broadcasting, IEEE SERVICE CENTER, PISCATAWAY, NJ, US, vol 57, N°2, 1 June 2011, p 551-561, describes a method for coding a video.

## SUMMARY

According to a general aspect, a segmentation is determined for a particular portion of a video image in a sequence of video images. The segmentation is determined based on reference depth indicators that are associated with at least a portion of one video image in the sequence of video images. Target depth indicators associated with the particular portion of the video image are processed. The processing is based on the determined segmentation in the particular portion of the video image.

According to another general aspect, a segmentation is determined for at least a given portion of a video image based on depth indicators associated with the given portion. The segmentation is extended from the given portion into a target portion of the video image based on pixel values in the given portion and on pixel values in the target portion.

The details of one or more implementations are set forth in the accompanying drawings and the description below. Even if described in one particular manner, it should be clear that implementations may be configured or embodied in various manners. For example, an implementation may be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

## BRIEF DESCRIPTION OF THE DRAWINGS

FIG. 1 is a pictorial representation of an example of a sequence of video images across time, and a sequence of associated depth images.

FIG. 2 is a block/flow diagram depicting an implementation of an apparatus and process for predicting depth values.

FIG. 3 is a pictorial representation of an example of pixels that are nearby a depth block *B*.

FIG. 4 is a pictorial representation of an example of a segmentation of the nearby pixels of FIG. 3.

FIG. 5 is a pictorial representation of an example of the segmentation of FIG. 4 applied to video pixels associated with the nearby pixels of FIG. 3.

FIG. 6 is a pictorial representation of an example of the segmentation of FIG. 5 being grown into video pixels of a video block *B'* associated with to the depth block *B*.

FIG. 7 is a pictorial representation of an example of the grown segmentation of FIG. 6 applied to the depth block *B*.

FIG. 8 is another pictorial representation of the segmentation of nearby depth pixels of FIG. 4.

FIG. 9 is a block/flow diagram depicting an implementation of an apparatus and process for growing the segmentation of FIG. 5 into the video block **B'** of FIG. 6.

FIG. 10 is a block/flow diagram depicting an implementation of another apparatus and process for growing the segmentation of FIG. 5 into the video block **B'** of FIG. 6.

FIG. 11 is a block/flow diagram depicting an implementation of an encoder and an encoding process for encoding depth samples.

FIG. 12 is a block/flow diagram depicting an implementation of a decoder and a decoding process for decoding depth samples.

FIG. 13 is a block/flow diagram depicting an implementation of an apparatus and process for encoding a block using a region growing based prediction.

FIG. 14 is a block/flow diagram depicting an implementation of an apparatus and process for decoding a block using a region growing based prediction.

FIG. 15 is a block/flow diagram depicting an implementation of an apparatus and process for processing depth data.

FIG. 16 is a block/flow diagram depicting an implementation of a transmission system and process that may be used with one or more implementations.

FIG. 17 is a block/flow diagram depicting an example of a receiving system and process that may be used with one or more implementations.

## DETAILED DESCRIPTION

As a preview of some of the features presented in this application, at least one implementation describes the encoding of a target block in a depth map using (i) reconstructed depth values neighboring the target block, and (ii) a video block associated with the target block of depth values. The implementation performs a segmenting operation on the neighboring reconstructed depth values, and uses the resulting segmentation to develop a segmentation of the video block. The segmentation that is developed for the video block is then applied back to the target depth block to encode the target depth block. Thus, depth information provides a starting point for segmenting video information, and the segmentation of the video information is then used to encode associated depth information. This implementation jointly considers the depth information and the video information to encode depth information.

In another implementation, a new coding mode is provided. The new coding mode may be referred to as a region-growing mode for coding a depth image without using another depth image. Additionally, at least one implementation does not use any other depth image as a prediction reference, nor use any video image as a traditional prediction reference..

One advantage of at least one implementation is that by using the associated 2D video and previous encoded depth information, it is possible that depth information in a current depth block can be estimated with very high accuracy. In some implementations, this estimation is used as the encoding of the depth information, in which case no depth information needs to be transmitted or stored because the estimation can be determined at a decoder as well as an encoder. Alternatively, some implementations use this estimation as a prediction of the depth, and a residue is determined and coded. As a result, various implementations reduce the bit rate for encoding depth information, and also maintain the quality of views rendered using a reconstruction of the depth information.

In at least one implementation, as mentioned above, a region growing - mode is proposed for efficient depth map coding. The region-growing-mode uses the correlation between the neighboring depth values and the target depth block , as well as the structural similarity between the depth map and the associated video. As a result, this coding mode is able to reduce the coding bit rate of the depth map. This coding mode also maintains the quality of a view that is rendered using a reconstructed depth map that is reconstructed from the coded depth map.

Various implementations are useful in one or more of a variety of applications. For example, in new video applications like 3D television ("3DTV") and free viewpoint video ("FVV"), it is typically essential to render virtual views in addition to the captured, encoded, and decoded views. Depth Image Based Rendering ("DIBR") is a technique to render virtual views. To achieve sufficient quality in the rendered views, it is preferable that depth boundaries be well preserved. Conventional video coding techniques typically result in large artifacts around sharp edges. Faithful representation of depth edges would generally cost significantly more in bits than coding other regions of the depth information. Several implementations are useful in providing the desired quality at an acceptable cost.

Depth data may be converted to disparity data, as is known in the art. Additionally, the implementations and features described in this application are intended to apply to both depth and disparity. Accordingly, depth (for example, depth data, depth values, depth images, depth maps, or depth information) and disparity (for example, disparity data, disparity values, disparity images, disparity maps, or disparity information), are intended to be addressed throughout this description, regardless of which term is used.

Additionally, at times the term "depth indicator" is used, and the term depth indicator is explicitly defined herein to include depth indicators and/or disparity indicators, as well as, for example, other types of data or information that indicate depth and/or disparity. A depth indicator includes, for example, in various implementations, depth data, disparity data, a depth value, a disparity value, at least a portion of a depth image, at least a portion of a disparity image, at least a portion of a depth map, at least a portion of a disparity map, depth information, and/or disparity information. The preceding items are not necessarily mutually exclusive, nor exhaustive of possible depth indicators. A picture that includes depth indicators may be referred to as a depth-indicator picture.

Depth indicators typically provide information (for example, depth or disparity information) for particular video pixels, or for a particular portion of a video picture. In one example, the depth indicators are embodied in a depth map, and the depth indicator at location (x, y) of the depth map provides the actual depth value for the particular video pixel at location (x, y) of a particular video picture. Throughout this application, such a relationship is referred to by saying that the depth indicator is associated with the particular video pixel. Equivalently, this application refers to such a relationship by saying that the depth indicator corresponds to the particular video pixel.

This concept can, of course, be generalized to refer to portions of, for example, a depth map and a video picture that are larger than a single pixel. In one example, a depth map provides all of the depth values for the pixels in a video picture. More specifically, the depth value at location (x, y) of the depth map provides the depth value for the pixel at location (x, y) of the video picture, for all locations (x, y). The entire depth map is said to be associated with (or corresponding to) the entire video picture.

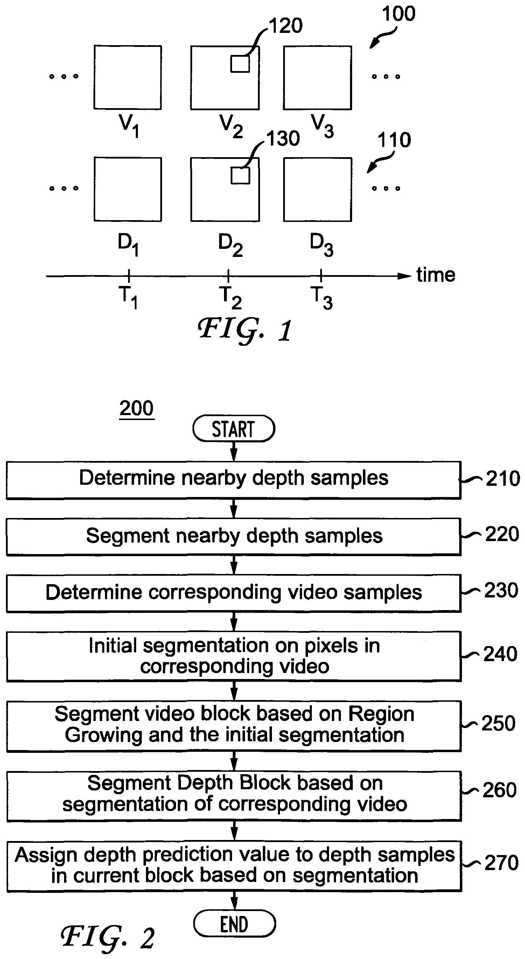

Referring to FIG. 1, there is shown a series of video pictures 100, and a series of depth pictures 110, that will be used to illustrate certain aspects of some implementations in this application. The series of video pictures 100 includes a first video picture V1 occurring at a time T1, a second video picture V2 occurring at a time T2, and a third video picture V3 occurring at a time T3. The series of depth pictures 110 includes a first depth picture D1 occurring at the time T1, a second depth picture D2 occurring at the time T2, and a third depth picture D3 occurring at the time T3.

V1 and D1 correspond to each other, V2 and D2 correspond to each other, and V3 and D3 correspond to each other. The correspondence means that blocks in D2, for example, include the depth information for corresponding locations of V2. This is shown, for example, for a block 120 at a location (x, y) of V2, which corresponds to a block 130 at a location (x, y) of D2.

Certain following portions of this application are divided into separate sections. This division is intended to provide ease of explanation and understanding. However, the division is not intended to limit the invention in any manner. In particular, the disclosure provided in any given section is applicable to the disclosure in any other section, just as if there were no section divisions.

## A. Region Growing Based Prediction

We now describe an implementation of a process for generating a prediction, also referred to more generally as an estimation, for a particular M×N block of depth values. In this embodiment, we are given an MxN block of depth values and neighboring blocks of depth values, as well as corresponding video. In this embodiment, we propose a region growing based method to get the prediction of a current MxN block *B*. Referring to FIG. 2, the region growing based predictor can be generated according to a process 200 shown in FIG. 2, and described below.

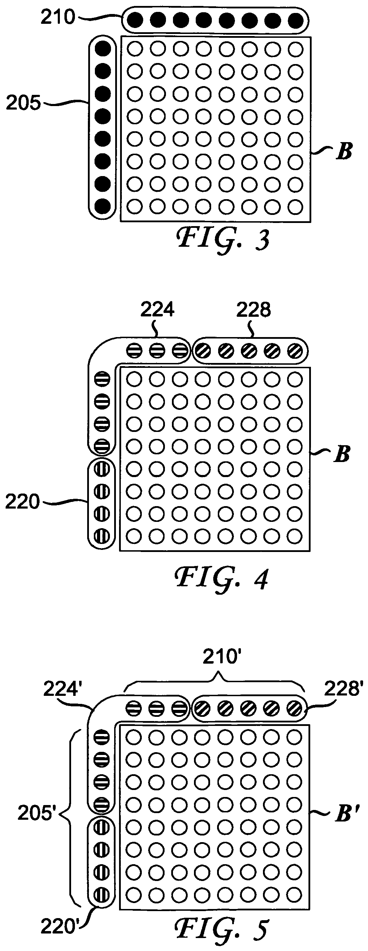

Step 1: Determine the nearby reconstructed depth samples that are near the block *B,* as described in an operation 210 of FIG. 2. Referring to FIGS. 3-8, FIG. 3 shows an example of this Step 1 in which only a neighboring line of pixels 205 to the left of the block *B,* and a neighboring line of pixels 210 on top of the block *B*, are considered as the nearby reconstructed depth samples.

Step 2: Segment the nearby reconstructed depth samples and, optionally, assign each depth sample a segmentation index. This Step 2 is described in an operation 220 of FIG. 2, and is depicted in FIG. 4. FIG. 4 includes a first segment 220 including four pixels shown with vertical hatching, a second segment 224 including seven pixels shown with horizontal hatching, and a third segment 228 including five pixels shown with diagonal hatching.

Step 3: Determine the video samples that correspond to the block *B,* as described in an operation 230 of FIG. 2 (not shown in FIGS. 3-8). However, if the block 130 of FIG. 1 is considered as the block *B,* then the block 120 contains the video samples that correspond to the block *B.*

Step 4: Segment the video samples that correspond to the reconstructed depth samples 205, 210, as described in an operation 240 of FIG. 2. One example of doing this is to apply the same segmentation to the video samples as that of the corresponding reconstructed depth samples. This example is shown in FIG. 5 for the video block **B'** which is the block corresponding the depth block **B**. FIG. 5 includes a line of video pixels 205' to the left of the video block **B',** and a line of video pixels 210' on top of the video block **B'**. Further, the pixels 205', 210' are segmented into three segments corresponding to the segmentation of the depth block **B**. That is, the pixels 205', 210' are segmented into (i) a first segment 220', shown with vertical hatching, that includes four pixels and corresponds to the segment 220 of FIG. 4, a second segment 224', shown with horizontal hatching, that includes seven pixels and corresponds to the segment 224 of FIG. 4, and (iii) a third segment 228', shown with diagonal hatching, that includes five pixels and corresponds to the segment 228 of FIG. 4.

Another implementation assigns the same index number to the video samples as that of the corresponding reconstructed depth samples.

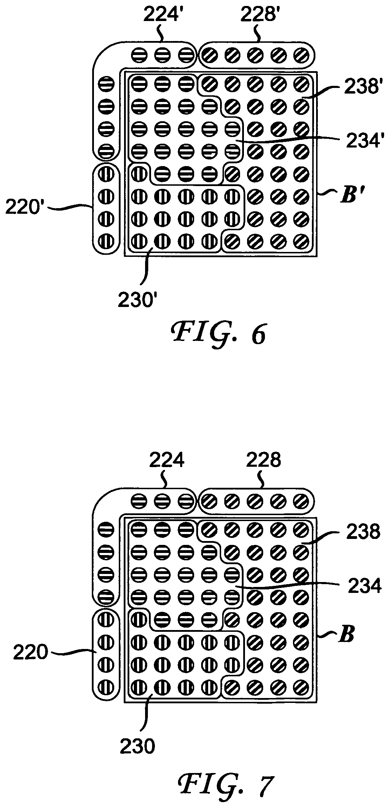

Step 5: Segment the video block **B'** based on the initial segmentation of Step 4, as described in an operation 250 of FIG. 2. An example is shown in FIG. 6, in which the segments 220', 224', and 228' are referred to as video pixels **VP**, and the segmentation is grown from **VP** into the video block B'. FIG. 6 shows that the three segments 220', 224', and 228' of the neighboring video pixels **VP** in lines 205', 210' have been grown into the video block **B'** to produce three segments. The three produced segments in the video block **B'** include a first segment 230' shown with vertical hatching, a second segment 234' shown with horizontal hatching, and a third segment 238' shown with diagonal hatching.

As indicated by the hatching, in one implementation, the segments 230', 234', and 238' may be considered to have grown from the segments 220', 224', and 228'. Specifically, the segment 230' may be considered to have grown from the segment 220', the segment 234' may be considered to have grown from the segment 224', and the segment 238' may be considered to have grown from the segment 228'.

Step 6: Segment the depth block **B** based on the segmentation of the corresponding video block **B',** as described in an operation 260 of FIG. 2. An example is shown in FIG. 7, in which the video segments 230', 234', and 238' are applied to the depth block **B**. In FIG. 7, (i) a segment 230 in the depth block **B** is associated with the segment 220 of the neighboring reconstructed depth samples, as shown by the common vertical hatching, (ii) a segment 234 in the depth block **B** is associated with the segment 224 of the neighboring reconstructed depth samples, as shown by the common horizontal hatching, and (i) a segment 238 in the depth block **B** is associated with the segment 228 of the neighboring reconstructed depth samples, as shown by the common diagonal hatching.

Various implementations assign segmentation indices to the segments of the blocks **B** and **B'**. Further, particular implementations assign corresponding indices for the corresponding segments between **B** and **B'**.

Additionally, various implementations assign segmentation indices to the segments of the reconstructed depth samples 205 and 210, as well as to the segments of the video samples 205' and 210' that correspond to the reconstructed depth samples 205 and 210. Further, particular implementations assign corresponding indices for the corresponding segments between these depth and video samples.

Step 7: Determine a depth prediction value for each depth sample in the depth block **B** based on the segmentation of FIG. 6, as described in an operation 270 of FIG. 2 (not shown in FIGS. 3-8). Various implementations are provided below.

In the following, we provide details for various implementations of Step 2, Step 5, and Step 7.

## A.1. Segmentation of nearby depth samples

The following discussion provides more details of an implementation of Step 2 from above, which is shown by FIG. 4.

Depth samples in a given depth map often contain homogeneous areas separated by sharp edges. As a result, some simple segmentation methods are expected to have good results for region-growing based predictions. In one embodiment, the segmentation rule is to generate continuous segments based on a threshold *th.* If the depth value difference between two neighboring depth samples is larger than *th*, then these two samples will be assigned to different segments. In the implementation of FIG. 4, the depth value difference is determined in one or more directions for each depth sample.

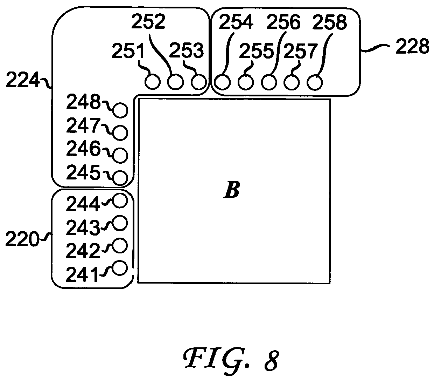

The example of FIG. 4 is continued in FIG. 8. FIG. 8 shows the sixteen nearby reconstructed depth samples. These depth samples are shown as samples 241-248 and 251-258. To determine the segmentation, the depth value of the sample 241 is compared to the depth value of the sample 242. The difference is less than or equal to *th*, so the depth samples 241 and 242 are part of the common segment 220. Likewise, the difference between the depth values of the samples 242 and 243, and the difference between the depth values of the samples 243 and 244, are both less than or equal to *th.* Therefore, the samples 241-244 are all part of the common segment 220.

However, the difference between the depth values of the samples 244 and 245 is greater than *th*, therefore the depth sample 245 is not part of the segment 220. Rather, the depth sample 245 is included in the segment 224. The difference between the depth values of the following pairs of depth samples is less than or equal to *th*: (i) the depth samples 245 and 246, (ii) the depth samples 246 and 247, (iii) the depth samples 247 and 248, (iv) the depth samples 248 and 251, (v) the depth samples 251 and 252, and (vi) the depth samples 252 and 253, Therefore, the depth samples 245-248 and 251-253 are all part of the common segment 224. Note that the depth samples 248 and 251 are compared because they are considered to be sufficiently proximate. However, another implementation automatically begins a new segment when transitioning from the depth sample 248 to the depth sample 251.

The difference between the depth values of the samples 253 and 254, however, is greater than *th.* Therefore the depth sample 254 is not part of the segment 224. Rather, the depth sample is included in the segment 228. The difference between the depth values of the following pairs of depth samples is less than or equal to *th:* (i) the depth samples 254 and 255, (ii) the depth samples 255 and 256, (iii) the depth samples 256 and 257, and (iv) the depth samples 257 and 258. Therefore, the depth samples 254-258 are all part of the common segment 228.

In one implementation, the threshold *th* is set as a constant. In several other implementations, the threshold *th* is calculated based on corresponding maximum and minimum depth values in the depth image. One particular implementation uses the equation $th = \alpha \times (d_{max} - d_{min})$, in which $d_{max}$ is the maximum depth value, $d_{min}$ is the minimum depth value, and $\alpha$ is a scaled factor selected from [0,1].

In one variation of this implementation, the maximum and minimum depth values are determined from the adjoining depth blocks that have already been reconstructed, so that the decoder can do the same process. Another variation of this implementation determines the maximum and minimum depth values using one or more depth blocks that have already been reconstructed but that are not adjoining the current depth block.

Another variation of this implementation determines the maximum and minimum depth values using the depth block that is being encoded, and yet another variation considers one or more other blocks yet to be encoded. Because the decoder will not typically know the exact pre-encoded depth values, particular implementations compute *th* and send the value of *th.* The value of *th* is typically an integer, so the overhead for sending this value is generally small.

Combinations of these variations also provide additional implementations. In one such implementation, the entire depth image is used, and the value of *th* is encoded and transmitted.

The value of alpha can be selected in a number of ways. In one implementation, alpha is determined based on empirical data to find the most efficient encoding mode based on a rate-distortion optimization. A small value of alpha will often result in more segments. Having more segments can produce more accurate predictions, at the cost of additional processing and storage. However, if alpha is too small, *th* may also be so small that the segmentation will be too sensitive (less robust) to slight variations of depth pixel values. This sensitivity will lead, in certain implementations, to potentially noisy region-growing results, less accurate predictions, and less efficient compression.


### A.2. Region Growing

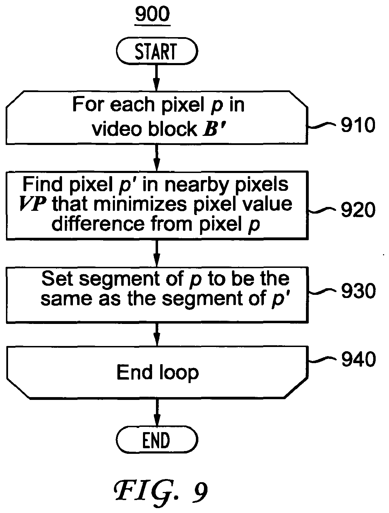

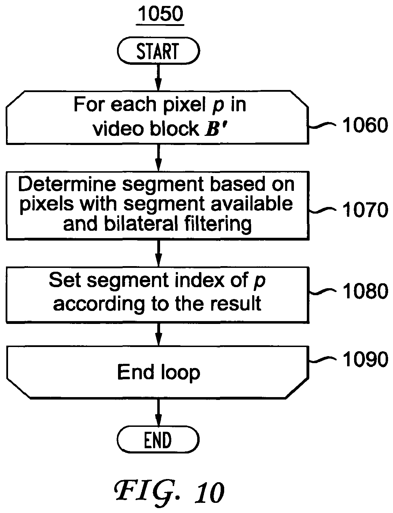

The following discussion provides more details of an implementation of Step 5 from above, which is shown by FIG. 6. Various methods may be used in the region growing process that is applied to the video pixels. Referring to FIGS. 9 and 10, two such methods are shown in the flowcharts of FIGS. 9 and 10.

FIG. 9 describes a process 900 that is applied to each pixel *p* in the video block ***B'***, as shown in a loop initialization operation 910. In the process 900, the nearby pixel set ***VP*** has already been segmented and that segmentation is grown into the video block ***B'***.

Step 9-1: The process 900 includes an operation 920 for determining the pixel *p'* = $\mathrm{argmin}_{q \in \boldsymbol{VP}} \|I_q - I_p\|$ where $I_q$ is the pixel value for pixel *q*. This determines the video pixel in ***VP*** that has the closest value to the current pixel *p*. Another implementation simply determines the first video pixel ***VP*** that has a value within a threshold of the value of the current pixel *p*.

Yet another implementation determines the mean (other implementations use the median or the mode) of the segmentations of ***VP**,* and compares $I_p$ against these mean values, rather than, for example, comparing $I_p$ against every pixel in ***VP**.* This implementation effectively associates each current pixel *p* with a segment of ***VP**.* The comparisons are performed, in various implementations, by determining the closest mean or determining the first mean that is within a given threshold. The threshold is, in various implementations, one or more of an absolute threshold in which the mean is within an absolute number of the pixel value, or a percentage threshold in which the mean is within a given percentage of the pixel value.

Step 9-2: The process 900 includes an operation 930 for assigning the segmentation index of pixel *p'* to the segmentation index of pixel $p$. In implementations that do not use segmentation indices, per se, it is sufficient that pixel $p$ is assigned to the same segment as pixel $p'$, regardless of how that segmented is indicated.

The process 900 also includes an operation 940 for determining if there are more pixels $p$ in the video block $\textbf{\textit{B'}}$ to be processed. If there are more pixels $p$ to be processed, the operations 920-930 are repeated for those remaining pixels $p$.

FIG. 10 describes a process 1050 that is applied to each pixel $p$ in the video block $\textbf{\textit{B'}}$, as shown in a loop initialization operation 1060. In the process 1050, as with the process 900, the nearby pixel set $\textbf{\textit{VP}}$ has already been segmented and that segmentation is grown into the video block $\textbf{\textit{B'}}$.

<u>Step 10-1:</u> As an initialization operation, set a pixel set $\textbf{\textit{VP'}} = \textbf{\textit{VP}}$ (nearby pixel set of the video block $\textbf{\textit{B'}}$) (not shown in FIG. 10).

For each pixel $p$ in the video block $\textbf{\textit{B'}}$, do the following two steps:

<u>Step 10-2:</u> The process 1050 includes an operation 1070 for determining the segmentation index as follows:

$$S_p = \operatorname*{argmax}_{i \in all\ segmentation\ indices} \frac{1}{K_p} \sum_{q \in VP'} F(i, S_q) \cdot f(\|p - q\|) \cdot g(\|I_q - I_p\|)$$

where:

$$F(i, S_q) = \begin{cases} 1, & \text{if } i = S_q \\ 0, & \text{if } i \neq S_q \end{cases},$$

and

$$K_p = \sum_{q \in VP'} f(\|p - q\|) \cdot g(\|I_q - I_p\|).$$

$K_p$ is a normalization factor, as is commonly used in bilateral filter designs.

The process 1050 also includes an operation 1080 for setting the segmentation index of the pixel $p$ according to the result from the operation 1070. Another implementation combines the operations 1070 and 1080.

Note that $S_q$ refers to the segmentation index of pixel $q$. Further, the functions $f$ and $g$ refer to a domain (spatial) filter kernel and a range filter kernel, respectively. The value of f should be smaller as $\|p-q\|$ gets larger, and similarly, the value of g should be smaller as $\|I_p-I_q\|$ gets larger. Different designs can be used for these two kernels, such as, for example, a Gaussian filter centered at $p$ and $I_p$, respectively.

Operations 1070 and 1080 have the effect of putting a pixel p from the video block $\textbf{\textit{B'}}$ into the segment that maximizes the bilateral filter summation. The summation for a given segment is performed across all pixels in the segment, including the nearby pixels and the pixels $p$ from video block $\textbf{\textit{B'}}$ that have already been placed into the segment in a Step 10-3 below.

The bilateral filter generally has the effect of considering both (i) the distance between the pixels and (ii) the difference in pixel values between the pixels. Thus, pixels that are close in distance are given more weight through the function $f$, and pixels that have pixel values that are similar are given more weight through the function $g$.

Additionally, it should be clear that the selection of $f$ and $g$ control how much emphasis to give to a single pixel. For example, depending on the selection of $f$ and $g$, a single pixel that has a high value for one or more of the functions $f$ and/or $g$ can be outweighed, or not, by multiple pixels that have lower values for the functions $f$ and $g$.

In implementations that do not use segmentation indices, per se, it is sufficient that pixel $p$ is assigned to the same segment that maximizes the equation above. For example, in another implementation, instead of the operation 1070 determining the segmentation index for a given pixel $p$, the operation 1070 determines the segment for the pixel $p$. The same bilateral filter equation is used (that is, the same functions $f$ and $g$ are used), but the bilateral filter result is summed across all pixels in a given segment, and the segment that maximizes this summation is selected as the segment for the pixel $p$.

<u>Step 10-3:</u> The operation 1070 also includes, in one implementation, setting $\textbf{\textit{VP'}} = \textbf{\textit{VP'}} \cup \{p\}$. This Step 10-3 has the effect of expanding the set of pixels that are considered in Step 10-2 immediately above (also in the operation 1070) for subsequent pixels $p$ in the video block $\textbf{\textit{B'}}$. Another implementation skips Step 10-3, and leaves the set $\textbf{\textit{VP'}}$

unchanged throughout the process 1050.

The process 1050 also includes an operation 1090 for determining if there are more pixels $p$ in the video block $B'$ to be processed. If there are more pixels $p$ to be processed, the operations 1070-1080 are repeated for those remaining pixels $p$.

### A.3. Generating Depth Predictors

The following discussion provides more details of an implementation of Step 7 from above, as shown in the operation 270 of FIG. 2. Step 7 from above determines a depth prediction value for each depth sample in the depth block B of depth samples based on the segmentation, as described in the operation 270 of FIG. 2 (not shown in FIGS. 3-8).

Various methods may be used to determine depth prediction values, also referred to as depth predictors. In some implementations, the prediction of each depth sample is generated based on, for example, the segmentation indices. In other implementations, the prediction of each depth sample is generated based on, for example, the values of nearby pixels. In other implementations, the prediction of each depth sample is generated based on, for example, the segmentation indices and the values of nearby pixels.

In various embodiments, the median or mean value for each segment (a segment corresponds, in several implementations, to a segmentation index) of the nearby depth samples is calculated. This produces a mean value for each segment of the nearby depth samples. Using the example of FIG. 4, for example, this produces a first mean value for the segment 220, a second mean value for the segment 224, and a third mean value for the segment 228.

Continuing with the use of the example of FIG. 4, the depth prediction for a depth sample $p$ in the depth block $B$ is set as the median or mean value of the assigned segment of nearby depth samples. That assigned segment may be labeled, for example, with segmentation index $S_p$. Using the example of FIG. 7, for example, this produces (i) a depth prediction equal to the first mean value (the mean of the segment 220) for each of the pixels in the segment 230, (ii) a depth prediction equal to the second mean value (the mean of the segment 224) for each of the pixels in the segment 234, and (iii) a depth prediction equal to the third mean value (the mean of the segment 228) for each of the pixels in the segment 238.

Other implementations use different metrics or functions or filters. One particular implementation uses a mode, and another implementation uses a median.

### B. Region Growing-Mode

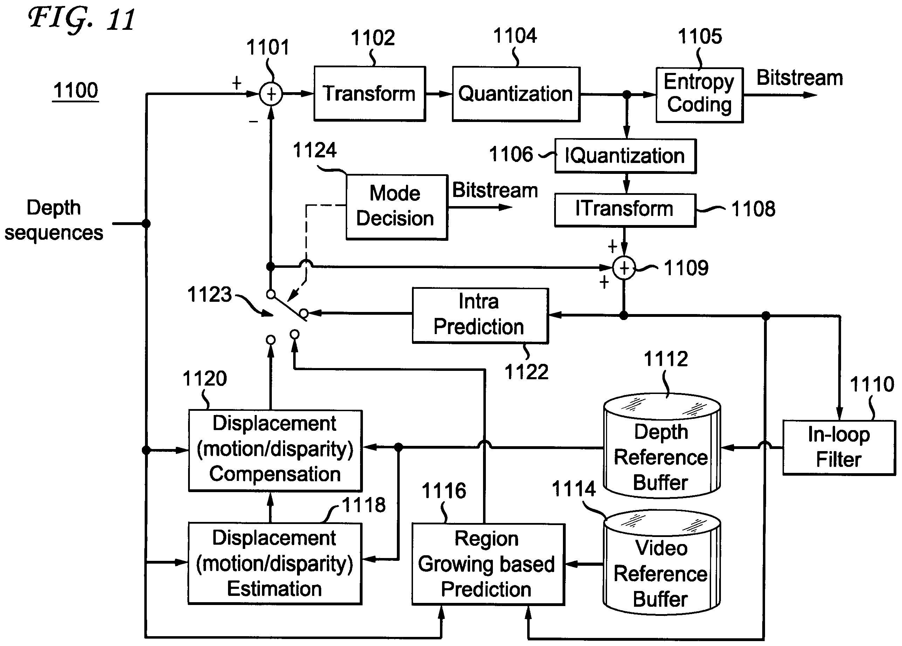

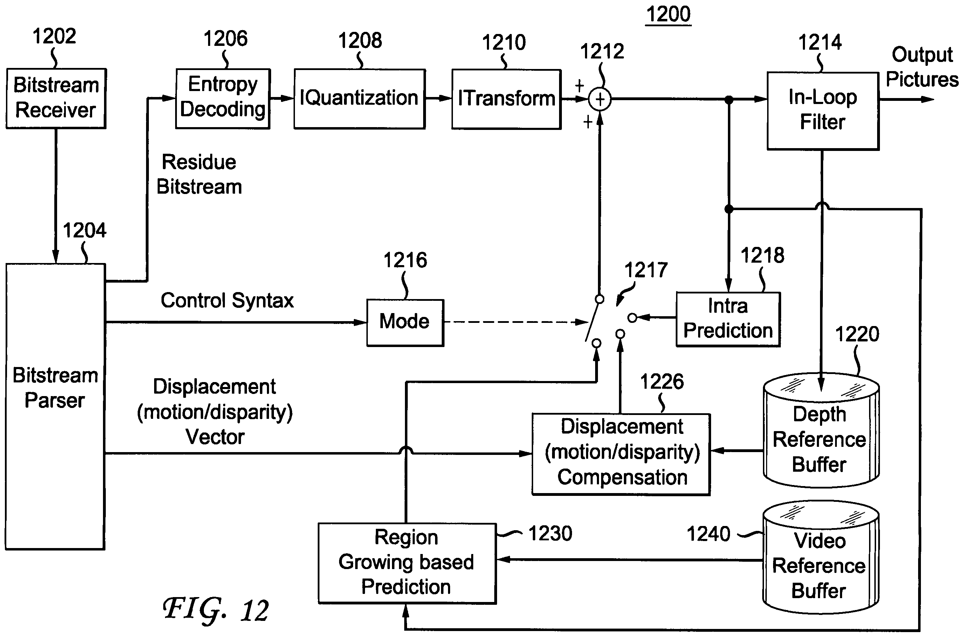

In this embodiment, a new depth coding mode is proposed: region-growing mode. The mode forms predictions for a given block of a depth picture without using a depth picture from a different time or a different view as a reference. We refer to the mode as a region growing mode. This mode is used, for example, in a depth encoder/decoder, as shown in FIG. 11 and FIG. 12. Other implementations adapt the region growing mode to use a reference depth picture from a different time, and/or from a different view. Such reference depth pictures are used, in different implementations to assist in predicting the current depth block, or to encode the residue.

To provide additional context for the description of implementations of this mode, FIGS. 11 and 12 are now discussed. FIG. 11 relates to encoding. FIG. 12 relates to decoding.

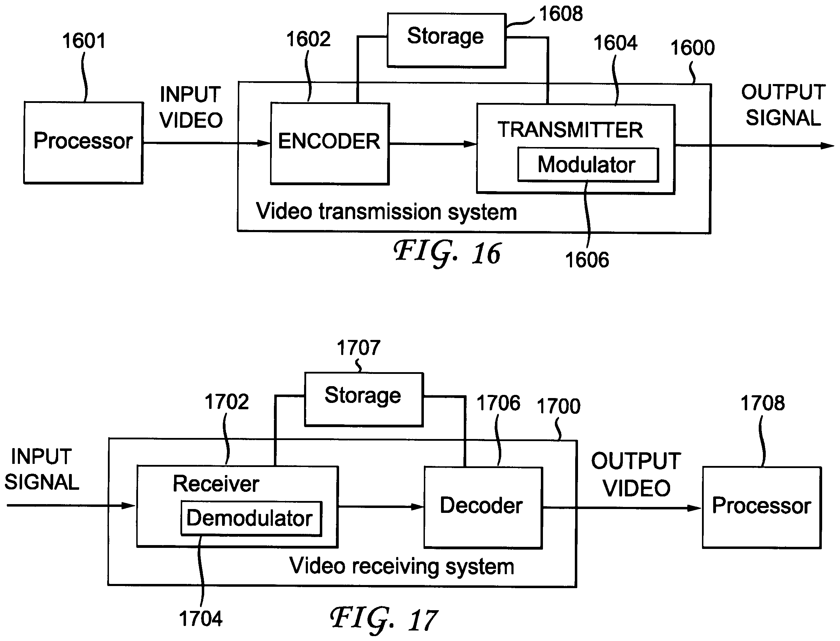

Referring to FIG. 11, an encoder 1100 depicts an implementation of an encoder that is used, in various implementations, to encode images such as, for example, video images or depth images. The encoder 1100 is also used, in particular implementations, to encode data, such as, for example, metadata providing information about the encoded bitstream. The encoder 1100 is implemented, in one implementation, as part of, for example, a video transmission system as described below with respect to FIG. 16. It should also be clear that the blocks of FIG. 11 provide a flow diagram of an encoding process, in addition to providing a block diagram of an encoder.

An input image sequence arrives at an adder 1101, as well as at a displacement compensation block 1120, a displacement estimation block 1118, and a region growing based prediction block 1116. Note that displacement refers, for example, to either motion displacement or disparity displacement. The input image sequence is, in one implementation, a depth sequence. Another input to the adder 1101 is one of a variety of possible reference picture information items received through a switch 1123.

For example, in a first scenario a mode decision module 1124 in signal communication with the switch 1123 determines that the encoding mode should be intra-prediction with reference to a block from the same picture (for example, a depth picture) currently being encoded. In this first scenario, the adder 1101 receives its input from an intra-prediction module 1122. Alternatively, in a second scenario, the mode decision module 1124 determines that the encoding mode should be displacement compensation and estimation with reference to a picture that is different (for example, a different time, or view, or both) from the picture currently being encoded. In this second scenario, the adder 1101 receives its input from the displacement compensation module 1120. Alternatively, in a third scenario, the mode decision module 1124 determines that the encoding mode should be region growing based prediction with reference to the depth currently being encoded and to the corresponding video picture (as explained further below). In this third scenario, the adder 1101 receives its input from the region growing based prediction block 1116.

In various implementations, the intra-prediction module 1122 provides a predetermined predictor based on one or more blocks that are neighboring blocks to a block being encoded. In various implementations, the intra-prediction module 1122 provides a predictor (a reference) by searching within the picture being encoded for the best reference block.

More specifically, several such predictor-based implementations search within a reconstruction of those portions of the current picture that have already been encoded. In some implementations, the searching is restricted to blocks that lie on the existing block boundaries. However, in other implementations, the searching is allowed to search blocks regardless of whether those blocks cross existing block boundaries. Because of the searching, such implementations are often more time-intensive and processor-intensive than merely using predetermined neighboring blocks as the references. However, such implementations typically offer the advantage of finding a better prediction of a given block.

Such implementations may lead to a best estimate intra-prediction block. Additionally, in various implementations, the boundaries of the reference block can lie on a sub-pixel boundary, and recovery of the reference involves an interpolation step to restore the actual block to be used as reference during decoding. Depending on the content of the pictures, such sub-pixel interpolation implementations may improve compression efficiency compared to the use of neighboring blocks as references.

The adder 1101 provides a signal to a transform module 1102, which is configured to transform its input signal and provide the transformed signal to a quantization module 1104. The quantization module 1104 is configured to perform quantization on its received signal and output the quantized information to an entropy encoder 1105. The entropy encoder 1105 is configured to perform entropy encoding on its input signal to generate a bitstream. An inverse quantization module 1106 is configured to receive the quantized signal from quantization module 1104 and perform inverse quantization on the quantized signal. In turn, an inverse transform module 1108 is configured to receive the inverse quantized signal from the inverse quantization module 1106 and perform an inverse transform on its received signal. The output of the inverse transform module 1108 is a reconstruction of the signal that is output from the adder 1101.

An adder (more generally referred to as a combiner) 1109 adds (combines) signals received from the inverse transform module 1108 and the switch 1123 and outputs the resulting signal to the intra-prediction module 1122, an in-loop filter 1110, and the region growing based prediction block 1116. The intra-prediction module 1122 and the region growing based prediction block 1116 use the resulting signal in, for example, coding additional blocks from the current picture. The in-loop filter 1110 filters the reconstructed picture data for a given picture, providing this to a depth reference buffer 1112 as explained further below. The resulting signal is a reconstruction of the image sequence signal that is input to the encoder 1100.

The intra-prediction module 1122 performs intra-prediction, as discussed above, using its received signals. The in-loop filter 1110 filters the signals received from the adder 1109 and provides filtered signals to a depth reference buffer 1112. The depth reference buffer 1112 provides image information to the displacement estimation and compensation modules 1118 and 1120. In one implementation, the depth reference buffer 1112 stores reference pictures from, for example, other time instances or other views, rather than from the current picture. The in-loop filter 1110 is, in one implementation, a deblocking filter.

In one implementation, the in-loop filter 1110 uses neighboring pixels to obtain filtered results for a given pixel in the current block. In various filter designs, the neighboring pixels for a current block include pixels from a non-decoded block. Accordingly, for those filter designs, the current block cannot be filtered while it is being decoded. Additionally, certain neighboring pixels that have been decoded already cannot be filtered until the current block is decoded. As a result, at least one implementation does not use filtered results in intra-prediction or region-growing mode. However, the implementation does use filtered results for inter-prediction because all blocks from a previous picture (a reference picture) have been decoded and can be filtered. Metadata may be added to the encoder 1100 as encoded metadata and combined with the output bitstream from the entropy coder 1105. Alternatively, for example, unencoded metadata may be input to the entropy coder 1105 for entropy encoding along with the quantized image sequences.

Data is also provided to the output bitstream by the mode decision module 1124. The mode decision module 1124 provides information to the bitstream that indicates the mode used to encode a given block. Such information often includes an indication of the location of the reference block. For example, in various implementations that use intra-prediction and that perform a search of the current picture to find a reference block, the mode decision module 1124 indicates the location of the reference using a disparity vector. The disparity vector information may be provided to the mode decision module 1124 by the intra-prediction module 1122.

As further described below, the disparity vector information may be differentially coded using the disparity vector of a neighboring macroblock as a reference. In addition, disparity vectors for a picture may be grouped and additionally encoded to remove entropy since there is likely to be spatial similarity in disparity vectors.

A video reference buffer 1114 stores video images that correspond, in one implementation, to depth images being encoded. A separate video encoder is used in one implementation to encode the video images, and the video encoder includes the video reference buffer 1114. In one implementation, the region growing based prediction block 1116 uses the information provided by the input image sequence to determine the coordinates of the video that corresponds to the depth block being encoded. The region growing based prediction block 1116 uses these coordinates to access the desired video from the video reference buffer 1114. The desired video includes, in one implementation, video corresponding to depth samples that neighbor the depth samples being encoded, as well as video corresponding to the depth samples being encoded.

The region growing based prediction block 1116 operates, in various implementations, to provide a prediction of the image being encoded. In one implementation, the region growing based prediction block 1116 performs the process 200 of FIG. 2.

Referring to FIG. 12, a decoder 1200 depicts an implementation of a decoder that may be used to decode images, such as, for example, depth images. The decoded images are provided, in one implementation, to a rendering device for producing additional views based on the depth data. The decoder 1200 is used, in other implementations, for example, to decode metadata providing information about the decoded bitstream, and/or to decode video data. In one implementation, the decoder 1200 is implemented as part of, for example, a video receiving system as described below with respect to FIG. 17. It should also be clear that the blocks of FIG. 12 provide a flow diagram of a decoding process, in addition to providing a block diagram of a decoder.

The decoder 1200 is configured to receive a bitstream using a bitstream receiver 1202. The bitstream receiver 1202 is in signal communication with a bitstream parser 1204 and provides the bitstream to the bitstream parser 1204.

The bitstream parser 1204 is configured to transmit a residue bitstream to an entropy decoder 1206, to transmit control syntax elements to a mode selection module 1216, and to transmit displacement (motion/disparity) vector information to a displacement compensation module 1226.

The displacement vector information may be, for example, motion vector information or disparity vector information. Motion vector information is typically used in inter-prediction to indicate relative motion from a previous image. Disparity vector information is typically used in either (i) inter-prediction to indicate disparity with respect to a separate image or (ii) intra-prediction to indicate disparity with respect to a portion of the same image. As is known in the art, disparity typically indicates the relative offset, or displacement, between two images. Disparity may also be used to indicate the relative offset, or displacement, between two portions of an image.

An inverse quantization module 1208 performs inverse quantization on an entropy decoded signal received from the entropy decoder 1206. In addition, an inverse transform module 1210 is configured to perform an inverse transform on an inverse quantized signal received from the inverse quantization module 1208 and to output the inverse transformed signal to an adder (also referred to as a combiner) 1212.

The adder 1212 can receive one of a variety of other signals depending on the decoding mode employed. For example, in one implementation, the mode decision module 1216 determines whether displacement compensation or intra-prediction encoding was performed by the encoder on the currently processed block by parsing and analyzing the control syntax elements. Depending on the determined mode, the mode selection control module 1216 accesses and controls a switch 1217, based on the control syntax elements, so that the adder 1212 receives signals from the displacement compensation module 1226, an intra-prediction module 1218, or a region growing based prediction block 1230.

Here, the intra-prediction module 1218 is configured to perform intra-prediction to decode a block using references to the same picture currently being decoded. In turn, the displacement compensation module 1226 is configured to perform displacement compensation to decode a block using references to a block of another previously processed picture (from a different time or view, or both, for example) that is different from the picture currently being decoded. The region growing based prediction block 1230 is configured to determine a prediction for a block being decoded.

The region growing based prediction block 1230 operates, in various implementations, to provide a prediction of the image being decoded. In one implementation, the region growing based prediction block 1230 performs the process 200 of FIG. 2. Additionally, in various implementations, the region growing based prediction block 1230 performs the same operations as the region growing based prediction block 1116 of the encoder 1100.

After receiving prediction or compensation information signals, the adder 1212 adds the prediction or compensation information signals with the inverse transformed signal for transmission to an in-loop filter 1214. The in-loop filter 1214 is, for example, a deblocking filter that filters out blocking artifacts. The adder 1212 also outputs the added signal to the intra-prediction module 1218 for use in intra-prediction, and to the region growing based prediction block 1230.

The in-loop filter 1214 is configured to filter its input signal and output decoded pictures. Further, the in-loop filter 1214 provides the filtered signal to a depth reference buffer 1220. The depth reference buffer 1220 is configured to parse its received signal to permit and aid in displacement compensation decoding by the displacement compensation module 1226, to which the depth reference buffer 1220 provides parsed signals. Such parsed signals may be, for example, all or part of various pictures that may have been used as a reference.

A video reference buffer 1240 stores video images that correspond, in one implementation, to depth images being decoded. A separate video decoder is used in one implementation to decode the video images, and the video decoder includes the video reference buffer 1240. The region growing based prediction block 1230 determines, in at least one implementation, the coordinates of the video that corresponds to the depth block being decoded. The region growing based prediction block 1230 uses these coordinates to access the desired video from the video reference buffer 1240. The desired video includes, in one implementation, video corresponding to depth samples that neighbor the depth samples being decoded, as well as video corresponding to the depth samples being decoded. The region growing based prediction block 1230 determines the video coordinates in various ways. For example, in one implementation, the region growing based prediction block 1230 automatically knows the coordinates of the depth block being decoded because decoding proceeds in a known manner (for example, left to right, and top to bottom) within a picture and a block. As another example, in another implementation, the region growing based prediction block 1230 uses information provided by the input bitstream to determine the coordinates of the depth block being decoded. The corresponding video is assumed to have the same coordinates as the depth block, or data is provided to indicate the corresponding video.

Metadata may be included in a bitstream provided to the bitstream receiver 1202. The metadata may be parsed by the bitstream parser 1204, and decoded by the entropy decoder 1206. The decoded metadata may be extracted from the decoder 1200 after the entropy decoding using an output (not shown).

In at least one implementation, many of the blocks of FIG. 12 perform inverse operations of corresponding blocks in FIG. 11. For example, in one implementation:

- the entropy decoder 1206 performs the inverse of the entropy encoder 1105,

- the inverse quantization module 1208 performs the inverse of the quantization module 1104, and

- the inverse transform module 1210 performs the inverse of the transform module 1102.

Further, as already indicated above, in at least one implementation, many of he blocks of FIG. 12 perform the same operations as corresponding blocks in FIG. 11. For example, in one implementation:

- the in-loop filter 1214 performs the same operations as the in-loop filter 1110,

- the intra-prediction module 1218 performs the same operations as the intra-prediction module 1122,

- the displacement compensation module 1226 performs the same operations as the displacement compensation module 1120, and

- the region growing based prediction block 1230 performs the same operations as the region growing based prediction block 1116.

We consider again the region growing -mode. In one implementation of this mode, the mode is implemented on a $16 \times 16$ macroblock ("MB") level. However, the region growing prediction is carried out at a 4x4 block level. Other implementations use different sizes to carry out the prediction. The encoding and decoding processes of this implementation are described in the following.

## B.1. Encoding with Region Growing based Mode

Referring again to FIG. 11, the encoder 1100 provides an implementation of a depth encoder that implements the region growing -mode. Two blocks of the encoder 1100 are particularly involved in implementing the region growing mode. These two blocks are the region growing based prediction block 1116, and the video reference buffer 1114. The operation of these two blocks is described above. Note that, in at least one implementation, the video reference buffer 1114 is maintained such that the reconstructed video frames from a video encoder can be accessed for RG prediction.

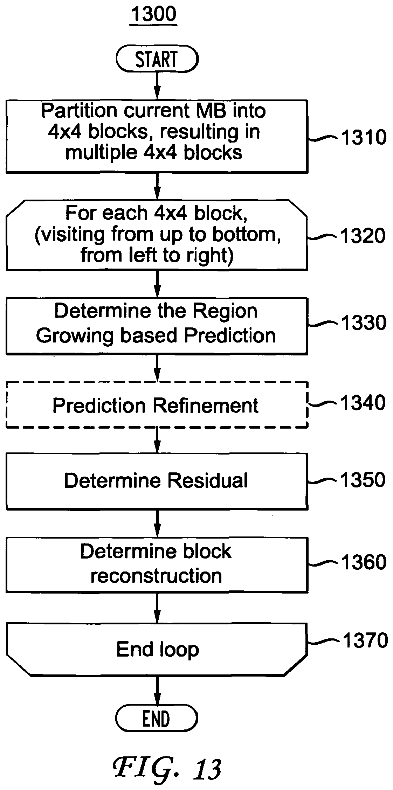

Referring to FIG. 13, a process 1300 is shown for encoding a macroblock with the region growing mode. Other implementations apply region growing prediction, such as, for example, the region growing mode, to data that is bigger than a macroblock (for example, a field, a frame, or a set of frames), smaller than a macroblock (for example, a partition), and/or of a non-uniform shape (for example, non-rectangular). The process 1300 includes the following operations:

Step 13-1: The process 1300 includes an operation of partitioning the current MB into $4 \times 4$ blocks (1310). Other implementations use partitions having different sizes than 4x4, such as, for example, 4x8, 8x4, 8x8, 8x16, or 16x8.

Step 13-2: For each 4x4 block, the process 1300 enters a loop (1320). Inside the loop, for a given 4x4 block, the process 1300 performs an operation of determining a region growing based prediction from nearby reconstructed depth samples (1330). In one implementation, the region growing based prediction is determined using the process 200 of FIG. 2.

Step 13-3: Within the loop, the process 1300 optionally refines the prediction determined in Step 13-2 (1340). The dashed box of the operation 1340 indicates that the operation 1340 is optional in the process 1300.

Step 13-4: Within the loop, the process 1300 determines the residual based on input depth information and the predicted depth value from either the operation 1330 in Step 13-2 or the operation 1340 in Step 13-3 (1350). In one implementation, the residual is calculated as the difference between the input depth information and the predicted depth value, and then transformed and quantized (see, for example, blocks 1102, 1104 in FIG. 11). Other implementations perform additional operations on the residue as part of the encoding process.

Step 13-5: Within the loop, the process 1300 determines the reconstructed depth block based on the residual information and the predicted depth values (1360). In one implementation, the reconstruction is formed by adding the residual information (which is de-quantized and inverse-transformed, as shown, for example, in blocks 1106 and 1108 of FIG. 11) to the predicted depth value. Other implementations perform additional operations on the residue as part of the encoding process.

Step 13-6: The process 1300 determines whether to perform the loop operations again for the next block (1370). If additional blocks remain to be processed, then the process 1300 performs Step 13-2 - Step 13-5 for the next block (note that Step 13-3 is optional), and continues performing the loop operations until all blocks are processed. The blocks are processed from top to bottom and left to right. One implementation proceeds from left to right, and top to bottom, by processing a top row (from left to right) and then proceeding to the next row down, until all rows are processed. Another implementation provides an equivalent result by processing a left column (from top to bottom) and the proceeding to the next column to the right, until all columns are processed. Yet other implementations process from right to left and/or from bottom to top, depending on which neighboring pixels are used in the processing. Other implementations process the blocks in different orders.

Note that a previously coded block/partition from a MB can be used to generate a prediction of a current (different) block/partition from the same MB. This is because the residual information is processed for each block/partition independently, and the reconstruction of a previous block/partition is available before the prediction of a current block/partition is determined.

The refinement process in Step 13-3 is skipped in various implementations in order to reduce the complexity of the encoder and/or decoder. However, several implementations include the refinement operation. Refinement operations include, for example, additional filtering operations.

We provide yet another example of a refinement operation. In one implementation, for a given depth sample in a 4x4 block, nearby depth samples are identified that meet two criteria. The two criteria are that the given depth sample and the nearby depth sample (i) have depth values that are similar to each other, and (ii) have corresponding video pixel values that are similar to each other. The median depth value of these identified nearby depth samples is determined. The median value is used as the refined depth sample value.

Nearby depth samples, for one implementation, are the set of four pixels that are immediately above the 4x4 block of depth samples being coded, and the set of four pixels that are immediately to the left. Note that the nearby depth samples are reconstructed depth samples from one or more previously encoded blocks/partitions. The set of nearby pixels is, for example, up to eight pixels. The set of nearby pixels can be larger than or smaller than, and overlapping with or non-overlapping with, the set of pixels in the segment that is associated with the given depth pixel to be coded in operation 1330 and/or operation 260.

Nearby depth samples, for another implementation, are restricted to those depth samples from the associated segment (for example, as determined in the operation 260) that further meet the two refinement criteria above. Thus, the set of nearby depth samples is no larger than, and is overlapping with, the set of pixels in the segment.

The two refinement criteria above can be evaluated, for example, by determining that the two values are similar if the two values are within a given threshold of each other. The threshold can be, for example, an absolute threshold or a percentage threshold.

One implementation calculates the median of the nearby depth samples. Other implementations, however, calculate one or more of the mean or the mode.

## B.2. Decoding/rendering

At the decoder side of this implementation, the frame of 2D video will be decoded prior to decoding the corresponding depth data Referring again to FIG. 12, the decoder 1200 provides an implementation of a depth decoder that decodes the depth data. In particular, the decoder 1200 is able to decode data that has been encoded using the region growing mode. Two blocks of the decoder 1200 are particularly involved in decoding depth data that has been encoded with the region growing mode. These two blocks are the region growing based prediction block 1230, and the video reference buffer 1240. The operation of the these two blocks is described above.

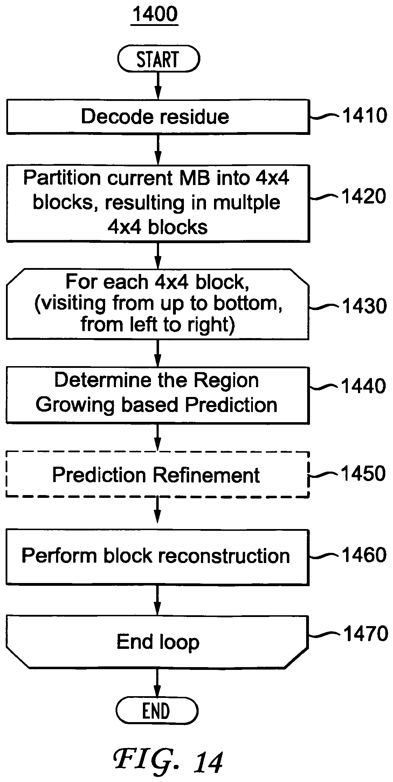

Referring to FIG. 14, a process 1400 is shown for decoding a MB that has been encoded with the region growing mode. Other implementations apply the region growing based mode, or region growing prediction more generally, to data that is bigger than a macroblock (for example, a field, a frame, a set of frames), smaller than a macroblock (for example, a partition), and/or of a non-uniform shape (for example, non-rectangular). Accordingly, other implementations of both the encoding and decoding sides operate on data sets that are of different sizes and/or shapes than a macroblock. The process 1400 includes the following operations:

Step 14-1: The process 1400 includes decoding the residue (1410).

Step 14-2: The process 1400 includes partitioning the MB into multiple 4x4 blocks (1420).

Step 14-3: For each 4x4 block, the process 1400 enters a loop (1430). Inside the loop, for a given block, the process 1400 includes determining the region growing based prediction based on nearby decoded blocks (1440). This operation is the same as that performed in operation 1330 of the encoding process 1300. The block scanning order is typically the same as that used in the encoder, which is, for example, left to right, and top to bottom. This provides consistent results at the encoder and decoder. This also provides the required blocks in the proper order at the decoder, thus reducing any need to store received blocks while decoding the received blocks in a different order than the order in which the blocks are received.

Step 14-4: Within the loop, the process 1400 optionally refines the prediction determined in the operation 1440 (1450). This operation is the same as that performed in operation 1340 of the encoding process 1300. Additionally, other implementations perform the refinement operation but go through a decision process to determine whether or not to use the refined prediction. To ensure consistency, these other implementations perform the same decision process at both the encoder and the decoder, or the encoder sends the results of the decision process to the decoder. The dashed box of the operation 1450 indicates that the operation 1450 is optional in the process 1400.

Step 14-5: Within the loop, the process 1400 includes performing block reconstruction (1460). In one implementation, the 4x4 block is reconstructed by adding the decoded residual information from the operation 1410 (step 1) to the current block prediction generated from either Step 14-3 (the operation 1440) or Step 14-4 (the operation 1450). The reconstructed depth block is the decoded result for the current depth block. As discussed with respect to Step 14-4, some implementations have a decision process for determining whether or not to use the refined prediction.

Step 14-6: The process 1400 determines whether to perform the loop operations again for the next block (1470). If additional blocks remain to be processed, then the process 1400 performs Step 14-3 - Step 14-5 (the operations 1440-1460) for the next block (with Step 14-4, and the operation 1450, being optional). Further, the process 1400 continues performing the loop operations until all blocks are processed (that is, until all blocks are decoded). The blocks are processed from top to bottom and left to right, as is done for the encoding side. Other implementations process the blocks in different orders.

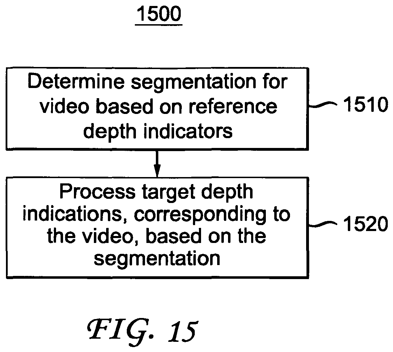

Referring to FIG. 15, a process 1500 is shown for processing depth indicators. The processing may include a variety of different operations. For example, in various implementations, the processing includes forming a prediction of depth indicators, encoding depth indicators, and/or decoding depth indicators.

The process 1500 includes determining a segmentation for a particular portion of a video image in a sequence of video images (1510). The segmentation is determined based on reference depth indicators. The reference depth indicators are for at least one video image in the sequence of video images.

The process 1500 includes processing target depth indicators that correspond to the particular portion of the video image (1520). The processing is based on the determined segmentation in the particular portion of the video image.

Various implementations of the process 1500 use a 3-step process. One such 3-step process, applicable to certain implementations is now described. In a first step, depth data is processed. In a second step, the processing of the depth data (from the first step) is used in processing related video. Note that the related video need not correspond exactly to the processed depth data. For example, in one implementation, the related video data corresponds to depth data that is nearby the processed depth data. In a third step, the processing of the related video data is used to process the corresponding depth data. Thus, the 3-step process, of these implementations, begins and ends with depth data.

In one implementation, the operations 1510 and 1520 are performed in the region growing based prediction blocks 1116 and/or 1230.

Referring now to FIG. 16, a video transmission system or apparatus 1600 is shown, to which the features and principles described above may be applied. The video transmission system or apparatus 1600 may be, for example, a head-end or transmission system for transmitting a signal using any of a variety of media, such as, for example, satellite, cable, telephone-line, or terrestrial broadcast. The video transmission system or apparatus 1600 also, or alternatively, may be used, for example, to provide a signal for storage. The transmission may be provided over the Internet or some other network. The video transmission system or apparatus 1600 is capable of generating and delivering, for example, video content and other content such as, for example, indicators of depth including, for example, depth and/or disparity values. It should also be clear that the blocks of FIG. 16 provide a flow diagram of a video transmission process, in addition to providing a block diagram of a video transmission system or apparatus.

The video transmission system or apparatus 1600 receives input video from a processor 1601. In one implementation, the processor 1601 simply provides video images, such as the video images V1, V2, and V3 of FIG. 1, to the video transmission system or apparatus 1600. However, in another implementation, the processor 1601 alternatively, or additionally, provides depth images, such as the depth images D1, D2, and D3 of FIG. 1, to the video transmission system or apparatus 1600. The processor 1601 may also provide metadata to the video transmission system or apparatus 1600, in which the metadata relates to one or more of the input images.

The video transmission system or apparatus 1600 includes an encoder 1602 and a transmitter 1604 capable of transmitting the encoded signal. The encoder 1602 receives video information from the processor 1601. The video information may include, for example, video images, and/or disparity (or depth) images. The encoder 1602 generates an encoded signal(s) based on the video and/or disparity information. The encoder 1602 is, in one implementation, the encoder 1100 of FIG. 11.

In various implementations, the encoder 1602 is, for example, an AVC encoder. The AVC encoder may be applied to both video and disparity information. AVC refers to the existing International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 Recommendation (hereinafter the "H.264/MPEG-4 AVC Standard" or variations thereof, such as the "AVC standard", the "H.264 standard", or simply "AVC" or "H.264").

The encoder 1602 may include sub-modules, including for example an assembly unit for receiving and assembling various pieces of information into a structured format for storage or transmission. The various pieces of information may include, for example, encoded or unencoded video, encoded or unencoded disparity (or depth) values, and encoded or unencoded elements such as, for example, motion vectors, coding mode indicators, and syntax elements. In some implementations, the encoder 1602 includes the processor 1601 and therefore performs the operations of the processor 1601.

The transmitter 1604 receives the encoded signal(s) from the encoder 1602 and transmits the encoded signal(s) in one or more output signals. The transmitter 1604 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 1606. The transmitter 1604 may include, or interface with, an antenna (not shown). Further, implementations of the transmitter 1604 may be limited to the modulator 1606.

The video transmission system or apparatus 1600 is also communicatively coupled to a storage unit 1608. In one implementation, the storage unit 1608 is coupled to the encoder 1602, and the storage unit 1608 stores an encoded bitstream from the encoder 1602 and, optionally, provides the stored bitstream to the transmitter 1604. In another implementation, the storage unit 1608 is coupled to the transmitter 1604, and stores a bitstream from the transmitter 1604. The bitstream from the transmitter 1604 may include, for example, one or more encoded bitstreams that have been further processed by the transmitter 1604. The storage unit 1608 is, in different implementations, one or more of a standard DVD, a Blu-Ray disc, a hard drive, or some other storage device.

Referring now to FIG. 17, a video receiving system or apparatus 1700 is shown to which the features and principles described above may be applied. The video receiving system or apparatus 1700 may be configured to receive signals over a variety of media, such as, for example, satellite, cable, telephone-line, or terrestrial broadcast. The signals may be received over the Internet or some other network. It should also be clear that the blocks of FIG. 17 provide a flow diagram of a video receiving process, in addition to providing a block diagram of a video receiving system or apparatus.

The video receiving system or apparatus 1700 may be, for example, a cell-phone, a computer, a set-top box, a television, or other device that receives encoded video and provides, for example, decoded video signal for display (display to a user, for example), for processing, or for storage. Thus, the video receiving system or apparatus 1700 may provide its output to, for example, a screen of a television, a computer monitor, a computer (for storage, processing, or display), or some other storage, processing, or display device.

The video receiving system or apparatus 1700 is capable of receiving and processing video information, and the video information may include, for example, video images, and/or disparity (or depth) images. The video receiving system or apparatus 1700 includes a receiver 1702 for receiving an encoded signal, such as, for example, the signals described in the implementations of this application. The receiver 1702 may receive, for example, a signal providing one or more of the video images V1, V2, and V3 of FIG. 1, the depth images D1, D2, and D3 of FIG. 1, or a signal output from the video transmission system 1600 (for example, from the storage unit 1608 or the transmitter 1604) of FIG. 16.

The receiver 1702 may be, for example, adapted to receive a program signal having a plurality of bitstreams representing encoded pictures (for example, video pictures or depth pictures). Typical receivers perform functions such as, for example, one or more of receiving a modulated and encoded data signal, demodulating the data signal from one or more carriers using a demodulator 1704, de-randomizing the energy in the signal, de-interleaving the data in the signal, and error-correction decoding the signal. The receiver 1702 may include, or interface with, an antenna (not shown). Implementations of the receiver 1702 may be limited to the demodulator 1704.

The video receiving system or apparatus 1700 includes a decoder 1706. The decoder 1706 is, in one implementation, the decoder 1200 of FIG. 12.

The receiver 1702 provides a received signal to the decoder 1706. The signal provided to the decoder 1706 by the receiver 1702 may include one or more encoded bitstreams. The decoder 1706 outputs a decoded signal, such as, for example, decoded video signals including video information, or decoded depth signals including depth information. The decoder 1706 may be, for example, an AVC decoder.

The video receiving system or apparatus 1700 is also communicatively coupled to a storage unit 1707. In one implementation, the storage unit 1707 is coupled to the receiver 1702, and the receiver 1702 accesses a bitstream from the storage unit 1707 and/or stores a received bitstream to the storage unit 1707. In another implementation, the storage unit 1707 is coupled to the decoder 1706, and the decoder 1706 accesses a bitstream from the storage unit 1707 and/or stores a decoded bitstream to the storage unit 1707. The bitstream accessed from the storage unit 1707 includes, in different implementations, one or more encoded bitstreams. The storage unit 1707 is, in different implementations, one or more of a standard DVD, a Blu-Ray disc, a hard drive, or some other storage device.

The output video from the decoder 1706 is provided, in one implementation, to a processor 1708. The processor 1708 is, in one implementation, a processor configured for performing rendering new views. In some implementations, the decoder 1706 includes the processor 1708 and therefore performs the operations of the processor 1708. In other implementations, the processor 1708 is part of a downstream device such as, for example, a set-top box or a television.

This application provides multiple block/flow diagrams, including the block/flow diagrams of FIGS. 2 and 9-17. It should be clear that the block/flow diagrams of this application present both a flow diagram describing a process, and a block diagram describing functional blocks of an apparatus. Additionally, this application provides multiple pictorial representations, including the pictorial representations of FIGS. 1 and 3-8. It should be clear that the pictorial representations of this application present both an illustration or a result or output, and a flow diagram describing a process.

Various implementations have been described that implement a new mode. The mode is referred to as the region growing mode. Various implementations signal the new mode using syntax in a mode table. The syntax includes, in one implementation, using a flag to indicate if a particular block is encoded with the new region growing mode or, rather, is encoded with a conventional mode. AVC, for example, includes a variety of conventional modes.

Various implementations may have one or more of a variety of advantages. A partial list of these advantages includes: (i) low complexity, (ii) preserving the depth edges, (iii) reducing the number of bits used to code flat areas of an image, (iv) using information from the depth and video of only a single view, rather than multiple views, to avoid inter-view distortions and warpings, and (v) deriving edge information for depth maps using the actual sample values in video frames, rather than using merely the motion information (for example, motion vectors) and coding mode.

We thus provide one or more implementations having particular features and aspects. In particular, we provide several implementations relating to predicting depth indicators. However, variations of these implementations and additional applications are contemplated and within our disclosure, and features and aspects of described implementations may be adapted for other implementations.

Several of the implementations and features described in this application may be used in the context of the AVC Standard, and/or AVC with the MVC extension (Annex H), and/or AVC with the SVC extension (Annex G). Additionally, these implementations and features may be used in the context of another standard (existing or future), or in a context that does not involve a standard.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, memory), storing the information, processing the information, transmitting the information, moving the information, copying the information, erasing the information, calculating the information, determining the information, predicting the information, or estimating the information.

Various implementations refer to "images" and/or "pictures". The terms "image" and "picture" are used interchangeably throughout this document, and are intended to be broad terms. An "image" or a "picture" may be, for example, all or part of a frame or of a field. The term "video" refers to a sequence of images (or pictures). An image, or a picture, may include, for example, any of various video components or their combinations. Such components, or their combinations, include, for example, luminance, chrominance, Y (of YUV or YCbCr or YPbPr), U (of YUV), V (of YUV), Cb (of YCbCr), Cr (of YCbCr), Pb (of YPbPr), Pr (of YPbPr), red (of RGB), green (of RGB), blue (of RGB), S-Video, and negatives or positives of any of these components. An "image" or a "picture" may also, or alternatively, refer to various different types of content, including, for example, typical two-dimensional video, a disparity map for a 2D video picture, a depth map that corresponds to a 2D video picture, or an edge map.

A "depth map", or "disparity map", or "edge map", or similar terms are also intended to be broad terms. A map generally refers, for example, to a picture that includes a particular type of information. However, a map may include other types of information not indicated by its name. For example, a depth map typically includes depth information, but may also include other information such as, for example, video or edge information.

The terms "neighbor" and "neighboring" are used throughout this application. A first block or pixel, as examples, are said to be a neighbor to a second block or pixel if the first block or pixel touches the second block or pixel. Therefore, a given block or pixel generally has eight neighbors, including the block or pixel to the left, to the right, above, below, and at the four corners.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C" and "at least one of A, B, or C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Additionally, many implementations may be implemented in one or more of an encoder (for example, the encoder 1100 or 1602), a decoder (for example, the decoder 1200 or 1706), a post-processor (for example, the processor 1708) processing output from a decoder, or a pre-processor (for example, the processor 1601) providing input to an encoder. Further, other implementations are contemplated by this disclosure.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, depth or disparity processing, and other processing of images and related depth and/or disparity maps. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed.

## Claims

1.   A method for generating at least one predictor value for a block of depth values (B) associated with a corresponding block (B') of pixels of a video image comprising:

• Determining (210) nearby depth samples that are near said block of depth values (B),
• Applying (220) a first segmentation to the nearby depth samples,
• Applying (240) said first segmentation to nearby video pixels that are near said block (B') of pixels,
• Applying (250) a second segmentation to the video block (B') of pixels, the second segmentation being determined by growing the first segmentation into the video block (B') of pixels,
• Applying (260) said second segmentation to the block of depth values (B),
• Determining (270) a depth prediction value for each segment of the first segmentation and using the depth prediction value as a predictor for depth values in a corresponding segment of the second segmentation.

2.   The method of claim 1 wherein applying (250) a second segmentation to the video block (B') of pixels comprises:

selecting a given pixel from the video block (B') of pixels;
determining a value of the given pixel;
determining a nearby pixel that has a closest value, among all pixels in a neighbor portion of said block (B') of pixels, to the value of the given pixel;
determining a segment to which the nearby pixel belongs according to the first segmentation; and
assigning the given pixel to the segment of the nearby pixel.

3.   The method of claim 1 wherein applying (250) a second segmentation to the video block (B') of pixels comprises:

selecting a given pixel from the video block (B') of pixels;
determining a metric value for the given pixel with respect to a specific segment of the first segmentation, wherein the metric value is based on (i) distance from the given pixel to at least one pixel in the specific segment, and (ii) difference in pixel value between the given pixel and the at least one pixel in the specific segment; and
assigning the given pixel to the specific segment based on the determined metric value.

4.   The method of any of claims 1 to 3 wherein determining (270) a depth prediction value comprises determining at least one of a mean or a median value for a segment of the first segmentation.

5.   The method of any of claims 1 to 4 furthermore comprising encoding (1300) the block of depth values (B) based on the at least one predictor value.

6. The method of claim 5 wherein encoding the block of depth values (B) comprises determining a residue (1350), for each depth value of a segment of the block of depth values (B), based on the depth value and the predictor value, and coding the residue.

7. The method of claim 6 wherein determining (1350) a residue comprises calculating a difference between the depth value and the predictor value.

8. The method of any of claims 1 to 4 wherein the block of depth values (B) is a block of coded depth values and the block (B') of pixels of a video image is a block of coded pixels, the method furthermore comprising decoding (1400) the block of coded depth values (B) based on the at least one predictor value.

9. The method of claim 8 wherein coded depth values comprise residues.

10. The method of any of claims 6 to 9 furthermore comprising determining (1360,1460) a reconstructed depth block comprising reconstructed depth values based on residues and a predictor value.

11. The method of claim 10 wherein determining (1360,1460) reconstructed a depth value comprises adding a residue to a predictor value.

12. The method of claim 10 or claim 11 wherein nearby depth samples that are near said block of depth values (B) comprise reconstructed depth values.

13. An apparatus comprising at least a prediction module (1116,1230) and a video buffer (1114,1240) configured for performing the steps of the method of any of claims 1 to 12.

14. A processor readable medium having stored thereon instructions for causing one or more processors to collectively perform the steps of the method of any of claims 1 to 12.


**Patentansprüche**

1. Verfahren zum Erzeugen mindestens eines Prädiktorwerts für einen Block von Tiefenwerten (B), der einem entsprechenden Block (B') von Pixeln eines Videobilds zugeordnet ist, wobei das Verfahren umfasst:

   • Bestimmen (210) nahegelegener Tiefenabtastwerte, die nahe dem Block von Tiefenwerten (B) sind,
   • Anwenden (220) einer ersten Segmentierung auf die nahegelegenen Tiefenabtastwerte,
   • Anwenden (240) der ersten Segmentierung auf nahegelegene Videopixel, die nahe dem Block (B') von Pixeln sind,
   • Anwenden (250) einer zweiten Segmentierung auf den Videoblock (B') von Pixeln, wobei die zweite Segmentierung durch das Anwachsen der ersten Segmentierung in den Videoblock (B') von Pixeln bestimmt ist,
   • Anwenden (260) der zweiten Segmentierung auf den Block von Tiefenwerten (B),
   • Bestimmen (270) eines Tiefenprädiktionswerts für jedes Segment der ersten Segmentierung und Verwenden des Tiefenprädiktionswerts als einen Prädiktor für Tiefenwerte in einem entsprechenden Segment der zweiten Segmentierung.

2. Verfahren nach Anspruch 1, wobei das Anwenden (250) einer zweiten Segmentierung auf den Videoblock (B') von Pixeln umfasst:

   Auswählen eines gegebenen Pixels aus dem Videoblock (B') von Pixeln;
   Bestimmen eines Werts des gegebenen Pixels;
   Bestimmen eines nahegelegenen Pixels, das unter allen Pixeln in einem Nachbarabschnitt des Blocks (B') von Pixeln zu dem Wert des gegebenen Pixels einen nächsten Wert aufweist;
   Bestimmen eines Segments, zu dem das nahegelegene Pixel in Übereinstimmung mit der ersten Segmentierung gehört; und
   Zuweisen des gegebenen Pixels zu dem Segment des nahegelegenen Pixels.

3. Verfahren nach Anspruch 1, wobei das Anwenden (250) einer zweiten Segmentierung auf den Videoblock (B') von Pixeln umfasst:

Auswählen eines gegebenen Pixels aus dem Videoblock (B') von Pixeln;

Bestimmen eines Metrikwerts für das gegebene Pixel in Bezug auf ein spezifisches Segment der ersten Segmentierung, wobei der Metrikwert (i) auf einer Entfernung von dem gegebenen Pixel zu mindestens einem Pixel in dem spezifischen Segment, und (ii) auf der Differenz des Pixelwerts zwischen dem gegebenen Pixel und dem mindestens einen Pixel in dem spezifischen Segment beruht; und

Zuweisen des gegebenen Pixels zu dem spezifischen Segment auf der Grundlage des bestimmten Metrikwerts.

4. Verfahren nach einem der Ansprüche 1 bis 3, wobei das Bestimmen (270) eines Tiefenprädiktionswerts das Bestimmen eines Mittelwerts und/oder eines Medianwerts für ein Segment der ersten Segmentierung umfasst.

5. Verfahren nach einem der Ansprüche 1 bis 4, das darüber hinaus das Codieren (1300) des Blocks von Tiefenwerten (B) auf der Grundlage des mindestens einen Prädiktorwerts umfasst.

6. Verfahren nach Anspruch 5, wobei das Codieren des Blocks von Tiefenwerten (B) das Bestimmen eines Rests (1350) für jeden Tiefenwert eines Segments des Blocks von Tiefenwerten (B) auf der Grundlage des Tiefenwerts und des Prädiktorwerts und das Codieren des Rests umfasst.

7. Verfahren nach Anspruch 6, wobei das Bestimmen (1350) eines Rests das Berechnen einer Differenz zwischen dem Tiefenwert und dem Prädiktorwert umfasst.

8. Verfahren nach einem der Ansprüche 1 bis 4, wobei der Block von Tiefenwerten (B) ein Block codierter Tiefenwerte ist und der Block (B') von Pixeln eines Videobilds ein Block codierter Pixel ist, wobei das Verfahren darüber hinaus das Decodieren (1400) des Blocks codierter Tiefenwerte (B) auf der Grundlage des mindestens einen Prädiktorwerts umfasst.

9. Verfahren nach Anspruch 8, wobei die codierten Tiefenwerte Reste umfassen.

10. Verfahren nach einem der Ansprüche 6 bis 9, das darüber hinaus das Bestimmen (1360, 1460) eines rekonstruierten Tiefenblocks, der rekonstruierte Tiefenwerte umfasst, auf der Grundlage von Resten und eines Prädiktorwerts umfasst.

11. Verfahren nach Anspruch 10, wobei das Bestimmen (1360, 1460) eines rekonstruierten Tiefenwerts das Addieren eines Rests zu einem Prädiktorwert umfasst.

12. Verfahren nach Anspruch 10 oder Anspruch 11, wobei nahegelegene Tiefenabtastwerte, die nahe dem Block von Tiefenwerten (B) sind, rekonstruierte Tiefenwerte umfassen.

13. Vorrichtung, die mindestens ein Prädiktionsmodul (1116, 1230) und einen Videopuffer (1114, 1240), umfasst, die dafür konfiguriert sind, die Schritte des Verfahrens nach einem der Ansprüche 1 bis 12 auszuführen.

14. Prozessorlesbares Medium, auf dem Anweisungen gespeichert sind, um zu veranlassen, dass ein oder mehrere Prozessoren zusammen die Schritte des Verfahrens nach einem der Ansprüche 1 bis 12 ausführen.

## Revendications

1. Procédé de génération d'au moins une valeur de prédicteur pour un bloc de valeurs de profondeur (B) associé à un bloc correspondant (B') de pixels d'une image vidéo comprenant :

• la détermination (210) d'échantillons de profondeur proches qui se trouvent à proximité dudit bloc de valeurs de profondeur (B),
• l'application (220) d'une première segmentation aux échantillons de profondeur proches,
• l'application (240) de ladite première segmentation à des pixels vidéo proches qui se trouvent à proximité dudit bloc (B') de pixels,
• l'application (250) d'une seconde segmentation au bloc vidéo (B') de pixels, la seconde segmentation étant déterminée par l'extension de la première segmentation dans le bloc vidéo (B') de pixels,
• l'application (260) de ladite seconde segmentation au bloc de valeurs de profondeur (B),
• la détermination (270) d'une valeur de prédiction de profondeur pour chaque segment de la première segmentation et l'utilisation de la valeur de prédiction de profondeur comme prédicteur pour les valeurs de profondeur dans un segment correspondant de la seconde segmentation.

2. Procédé selon la revendication 1 dans lequel l'application (250) d'une seconde segmentation au bloc vidéo (B') de pixels comprend :

la sélection d'un pixel donné à partir du bloc vidéo (B') de pixels ; la détermination d'une valeur du pixel donné ; la détermination d'un pixel proche présentant une valeur la plus proche, parmi tous les pixels d'une partie voisine dudit bloc (B') de pixels, de la valeur du pixel donné ;
la détermination d'un segment auquel appartient le pixel proche selon la première segmentation ; et l'affectation du pixel donné au segment du pixel proche.

3. Procédé selon la revendication 1 dans lequel l'application (250) d'une seconde segmentation au bloc vidéo (B') de pixels comprend :

la sélection d'un pixel donné à partir du bloc vidéo (B') de pixels ; la détermination d'une valeur métrique pour le pixel donné par rapport à un segment spécifique de la première segmentation, dans laquelle la valeur métrique est basée sur (i) la distance entre le pixel donné et au moins un pixel dans le segment spécifique et (ii) la différence de valeur de pixel entre le pixel donné et le au moins un pixel dans le segment spécifique ; et l'affectation du pixel donné au segment spécifique d'après la valeur métrique déterminée.

4. Procédé selon l'une des revendications 1 à 3 dans lequel la détermination (270) d'une valeur de prédiction de profondeur comprend la détermination d'au moins une valeur moyenne ou médiane pour un segment de la première segmentation.

5. Procédé selon l'une des revendications 1 à 4 comprenant en outre le codage (1300) du bloc de valeurs de profondeur (B) d'après la au moins une valeur de prédicteur.

6. Procédé selon la revendication 5 dans lequel le codage du bloc de valeurs de profondeur (B) comprend la détermination d'un résidu (1350), pour chaque valeur de profondeur d'un segment du bloc de valeurs de profondeur (B), d'après la valeur de profondeur et la valeur de prédicteur, et le codage du résidu.

7. Procédé selon la revendication 6 dans lequel la détermination (1350) d'un résidu comprend le calcul d'une différence entre la valeur de profondeur et la valeur de prédicteur.

8. Procédé selon l'une des revendications 1 à 4 dans lequel le bloc de valeurs de profondeur (B) est un bloc de valeurs de profondeur codées et le bloc (B') de pixels d'une image vidéo est un bloc de pixels codés, le procédé comprenant en outre le décodage (1400) du bloc de valeurs de profondeur codées (B) d'après la au moins une valeur de prédicteur.

9. Procédé selon la revendication 8 dans lequel les valeurs de profondeur codées comprennent des résidus.

10. Procédé selon l'une des revendications 6 à 9 comprenant en outre la détermination (1360, 1460) d'un bloc de profondeur reconstruit comprenant des valeurs de profondeur reconstruites d'après des résidus et une valeur de prédicteur.

11. Procédé selon la revendication 10 dans lequel la détermination (1360, 1460) d'une valeur de profondeur reconstruite comprend l'ajout d'un résidu à une valeur de prédicteur.

12. Procédé selon la revendication 10 ou la revendication 11 dans lequel des échantillons de profondeur proches qui se trouvent à proximité dudit bloc de valeurs de profondeur (B) comprennent des valeurs de profondeurs reconstruites.

13. Appareil comprenant au moins un module de prédiction (1116, 1230) et un tampon vidéo (1114, 1240) configuré pour exécuter les étapes du procédé selon l'une des revendications 1 à 12.

14. Support lisible par un processeur sur lequel sont stockées des instructions permettant à un ou plusieurs processeurs d'exécuter collectivement les étapes du procédé selon l'une des revendications 1 à 12.

100

120

V₁   V₂   V₃

130   110

D₁   D₂   D₃

time

T₁   T₂   T₃

**FIG. 1**

200

START

Determine nearby depth samples — 210

Segment nearby depth samples — 220

Determine corresponding video samples — 230

Initial segmentation on pixels in corresponding video — 240

Segment video block based on Region Growing and the initial segmentation — 250

Segment Depth Block based on segmentation of corresponding video — 260

Assign depth prediction value to depth samples in current block based on segmentation — 270

END

**FIG. 2**

FIG. 3

FIG. 4

FIG. 5

FIG. 6

FIG. 7

FIG. 8

<u>900</u>

( START )

↓

For each pixel *p* in
video block *B'* ⎱~910

↓

Find pixel *p'* in nearby pixels
*VP* that minimizes pixel value
difference from pixel *p* ⎱~920

↓

Set segment of *p* to be the
same as the segment of *p'* ⎱~930

↓

End loop ⎱~940

↓

( END )

*FIG. 9*

<u>1050</u>

( START )

For each pixel *p* in video block **B'** — 1060

Determine segment based on pixels with segment available and bilateral filtering — 1070

Set segment index of *p* according to the result — 1080

End loop — 1090

( END )

*FIG. 10*

*FIG. 11*

1100

FIG. 12

1200

## 1300

```
( START )
     |
     v
+-----------------------------+
| Partition current MB into   |
| 4x4 blocks, resulting in    |—— 1310
| multiple 4x4 blocks         |
+-----------------------------+
     |
     v
/-----------------------------\
| For each 4x4 block,         |
| (visiting from up to bottom,|—— 1320
| from left to right)         |
\-----------------------------/
     |
     v
+-----------------------------+
| Determine the Region        |—— 1330
| Growing based Prediction    |
+-----------------------------+
     |
     v
+ - - - - - - - - - - - - - - +
| Prediction Refinement       |—— 1340
+ - - - - - - - - - - - - - - +
     |
     v
+-----------------------------+
| Determine Residual          |—— 1350
+-----------------------------+
     |
     v
+-----------------------------+
| Determine block             |—— 1360
| reconstruction              |
+-----------------------------+
     |
     v
\-----------------------------/
|  End loop                   |—— 1370
/-----------------------------\
     |
     v
( END )
```

*FIG. 13*

<u>1400</u>

```
        ( START )
            │
            ▼
┌─────────────────────────┐
│     Decode residue      │────1410
└─────────────────────────┘
            │
            ▼
┌─────────────────────────┐
│ Partition current MB into 4x4 │
│ blocks, resulting in multple  │────1420
│        4x4 blocks             │
└─────────────────────────┘
            │
            ▼
┌─────────────────────────┐
│    For each 4x4 block,   │
│ (visiting from up to bottom, │────1430
│    from left to right)   │
└─────────────────────────┘
            │
            ▼
┌─────────────────────────┐
│   Determine the Region   │────1440
│ Growing based Prediction │
└─────────────────────────┘
            │
            ▼
┌ ─ ─ ─ ─ ─ ─ ─ ─ ─ ─ ─ ─ ┐
│   Prediction Refinement  │────1450
└ ─ ─ ─ ─ ─ ─ ─ ─ ─ ─ ─ ─ ┘
            │
            ▼
┌─────────────────────────┐
│ Perform block reconstruction │────1460
└─────────────────────────┘
            │
            ▼
┌─────────────────────────┐
│        End loop          │────1470
└─────────────────────────┘
            │
            ▼
        ( END )
```

*FIG. 14*

1500

```
┌─────────────────────────────┐
│   Determine segmentation for │
│   video based on reference   │──~ 1510
│   depth indicators           │
└─────────────────────────────┘
              │
              ▼
┌─────────────────────────────┐
│   Process target depth       │
│   indications, corresponding to│
│   the video, based on the    │──~ 1520
│   segmentation               │
└─────────────────────────────┘
```

*FIG. 15*

*FIG. 16*

Video transmission system

1601 Processor — INPUT VIDEO — 1602 ENCODER — 1604 TRANSMITTER 1600 OUTPUT SIGNAL

1608 Storage

1606 Modulator

*FIG. 17*

Video receiving system

INPUT SIGNAL — 1702 Receiver 1704 Demodulator — 1706 Decoder 1700 — OUTPUT VIDEO — 1708 Processor

1707 Storage

EP 2 748 794 B1

32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New depth coding techniques with utilisation of corresponding video. **SHUJIE LIU et al.** IEEE transactions on broadcasting. IEEE SERVICE CENTER, 01 June 2011, vol. 57, 551-561